# FASCICULE DE BREVET EUROPEEN

(11) **EP 2 748 822 B1**
(45) Date de publication et mention de la délivrance du brevet: **23.09.2015**
(21) Numéro de dépôt: 12750372.0
(22) Date de dépôt: 21.08.2012
(51) Int. Cl.: G21C 3/62

(54) **PROCEDE DE PREPARATION D'UN COMBUSTIBLE NUCLEAIRE POREUX**
VERFAHREN ZUR HERSTELLUNG EINES PORÖSEN KERNBRENNSTOFFES
METHOD FOR PREPARING A POROUS NUCLEAR FUEL

(30) Priorité: 22.08.2011 FR 1157443
(43) Date de publication de la demande: 02.07.2014
(73) Titulaire: Commissariat à l'Énergie Atomique et aux Énergies Alternatives, 75015 Paris (FR)
(72) Inventeur: PICART, Sébastien, F-30400 Villeneuve Les Avignon (FR); REMY, Elodie, F-84000 Avignon (FR); DELAHAYE, Thibaud, F-30330 Tresques (FR)
(74) Mandataire: Ahner, Philippe
(86) Numéro de dépôt international: PCT/EP2012/066284
(87) Numéro de publication internationale: WO 2013/026851

(56) Documents cités:
- EP-A1- 0 789 365
- DE-A1- 10 138 874
- FR-A1- 2 909 479
- US-B1- 6 251 309

## Description

### DOMAINE TECHNIQUE

L'invention a trait à un procédé de préparation d'un combustible nucléaire poreux comprenant de l'uranium, éventuellement du plutonium et éventuellement au moins un actinide mineur mettant en oeuvre des étapes ne faisant pas intervenir de composés pulvérulents de ces éléments.

Ce procédé peut trouver, en particulier, application dans le recyclage d'actinides mineurs via l'incorporation de ces actinides mineurs dans le combustible susmentionné, lequel est destiné à être utilisé pour constituer des crayons nucléaires pour réacteur nucléaire ou encore, à entrer dans la constitution de cibles de transmutation, en vue d'effectuer des expériences de transmutation nucléaire notamment pour mieux comprendre le mécanisme de transmutation de ces éléments actinides mineurs.

Ce procédé peut trouver, plus largement, application simplement dans la fabrication de combustibles poreux comprenant de l'uranium.

On précise, pour la suite de l'exposé, que par actinide mineur, on entend les éléments actinides autres que l'uranium, le plutonium et le thorium, formés dans les réacteurs par captures successives de neutrons par les noyaux de combustible standard, les actinides mineurs étant l'américium, le curium et le neptunium.

### ÉTAT DE LA TECHNIQUE ANTÉRIEURE

En fonctionnement, les réacteurs à eau pressurisée fonctionnant avec des combustibles à base d'uranium génèrent des produits de fission, dont certains sont sous forme de gaz, ainsi que des éléments lourds : les actinides mineurs. Ces derniers, formés par captures neutroniques successives des noyaux du combustible, sont principalement des isotopes du neptunium, de l'américium et du curium. Ils sont à l'origine d'une forte émission α et d'un dégagement de gaz hélium en quantité importante. Pour des raisons de sécurité, il est donc préférable que les combustibles neufs à base d'uranium présentent intrinsèquement, du fait de ces phénomènes intervenant en cours d'usage ou en cours de stockage pour les combustibles intégrant, dès leur fabrication, une quantité non négligeable d'actinides mineurs, un niveau de porosité stable sous irradiation, qui permette, l'évacuation de ces gaz de fission et de l'hélium de décroissance sans dégradation physique du combustible.

Après usage, les combustibles comprenant des actinides mineurs sont recyclés actuellement selon deux voies distinctes connues sous les appellations suivante :
- le recyclage hétérogène ; et
- le recyclage homogène.

Dans le cas du recyclage hétérogène, les actinides mineurs sont séparés, lors du traitement du combustible usé, de l'uranium et du plutonium, et sont ensuite incorporés, à une teneur plus élevée, dans des éléments de combustible fertile distincts des éléments de combustible fissile standard du réacteur. Les éléments de combustible comprenant les actinides mineurs peuvent consister, par exemple, en des éléments de couverture disposés en périphérie du coeur d'un réacteur. Cette voie de recyclage permet, notamment, d'éviter de dégrader les caractéristiques du coeur des réacteurs par des combustibles non standards incorporant des actinides mineurs en concentrant les problèmes de recyclage générés par ces actinides sur un flux de matière réduit.

Dans le cas du recyclage homogène, les actinides mineurs sont mélangés, à une faible teneur, et sont répartis de façon quasi uniforme dans la totalité des éléments de combustible standard de réacteur. Pour ce faire, lors du traitement du combustible usé, l'uranium, le plutonium et les actinides mineurs sont traités ensemble pour former des oxydes, lesquels sont ensuite utilisés dans la fabrication desdits combustibles.

L'introduction d'actinides mineurs dans des combustibles destinés au coeur de réacteur se traduit, au même titre que pour les combustibles où les actinides mineurs apparaissent en cours d'usage, par une émission importante, au sein de ces combustibles, de gaz de fission et par une forte émission α. Pour des raisons de sécurité, il faut donc prévoir des combustibles présentant une microstructure comportant un niveau de porosité stable sous irradiation, qui permet, qui plus est, l'évacuation des gaz de fission et de l'hélium de décroissance sans dégradation physique du combustible. Le taux de porosité recommandé pour de tels combustibles doit être de l'ordre de 14 à 16%, de même que la porosité doit être une porosité ouverte, de sorte à faciliter le relâchement de l'hélium produit et éviter les phénomènes de gonflement du combustible subséquents à l'auto-irradiation induite par la production d'actinides mineurs.

Pour essayer d'approcher voire d'atteindre un tel taux, il est connu d'incorporer dans le précurseur combustible des quantités importantes d'agents porogènes organiques pendant l'étape de mélange/broyage des oxydes susmentionnés. Toutefois, la tenue dans le temps des agents porogènes organiques n'est pas assurée compte tenu du niveau élevé d'émission α générée par la présence des actinides mineurs. En effet, les agents porogènes utilisés actuellement (tels que l'azodicarbonamide) perdent très rapidement leurs propriétés, ce qui peut générer un important taux de rebut difficilement gérable du fait de la présence des actinides mineurs. Il en résulte une impossibilité de stocker les mélanges précurseurs destinés à constituer les combustibles et, du fait de la dégradation des agents porogènes, un risque de gonflement des pastilles du combustible avant frittage destinées à entrer dans la constitution du combustible. Il s'ensuit, de ce fait, une impossibilité d'obtenir des combustibles présentant une porosité contrôlée.

Les présents inventeurs se sont fixé pour but de proposer un procédé de préparation d'un combustible poreux comprenant de l'uranium, ne présentant pas les inconvénients inhérents à l'utilisation des agents porogènes organiques, à savoir la dégradation de ces agents dès le stade du mélange des précurseurs du combustible, ce procédé innovant passant par l'utilisation d'agents porogènes inorganiques, qui permettent, entre autres, un contrôle de la porosité, tant en termes quantitatifs qu'en termes qualitatifs (notamment en termes de tailles de pores et de caractéristiques de pores).

### EXPOSÉ DE L'INVENTION

Ainsi, l'invention a trait à un procédé de fabrication d'un combustible poreux comprenant de l'uranium, éventuellement du plutonium, et éventuellement au moins un actinide mineur comprenant successivement les étapes suivante :
a) une étape de compactage d'un mélange comprenant un premier type d'agglomérats comprenant de l'oxyde d'uranium sous forme de dioxyde d'uranium UO₂, éventuellement de l'oxyde de plutonium, et éventuellement au moins un oxyde d'un actinide mineur, et un deuxième type d'agglomérats comprenant de l'oxyde d'uranium sous forme d'octaoxyde de triuranium U₃O₈, éventuellement de l'oxyde de plutonium, et éventuellement au moins un oxyde d'un actinide mineur;
b) une étape de réduction en milieu réducteur du mélange compacté, de sorte à réduire tout ou partie de l'octaoxyde de triuranium U₃O₈ en dioxyde d'uranium UO₂.

Le deuxième type d'agglomérats susmentionné peut être préparé préalablement à l'étape de compactage a) par une succession d'opérations spécifiques qui sera exposée plus en détail ci-dessous.

Dans la suite de cet exposé, on utilisera indifféremment les expressions «premier type d'agglomérats » ou « agglomérats du premier type » et « deuxième type d'agglomérats » ou « agglomérats du deuxième type ».

Ce procédé innovant présente les avantages suivantes :
- du fait de l'utilisation d'agglomérats et non de poudres en tant que telles, il n'induit pas les dangers liés à la manipulation de poudres (tels que la dispersion et la volatilité), les dangers étant d'autant plus importants ici que l'invention se situe dans le domaine nucléaire ;
- il ne fait pas intervenir d'étape de granulation de poudres, ce qui permet de réduire les risques de contamination liés à la présence de fines particules générées durant une telle étape ;
- du fait que la réduction de l'octaoxyde de triuranium U₃O₈ s'accompagne d'une diminution de volume d'environ 30%, il est possible, en jouant sur la forme des agglomérats du deuxième type, sur la quantité d'octaoxyde de triuranium U₃O₈ contenu en ceux-ci et sur la proportion d'agglomérats du deuxième type par rapport à ceux du premier type, de contrôler la porosité du combustible obtenu à l'issue de l'étape de réduction, ce contrôle pouvant s'opérer tant en termes de forme de pores, de taille de pores que de quantité de pores.

Comme mentionné ci-dessus, l'étape de compactage intervient sur un mélange comprenant un premier type d'agglomérats comprenant de l'oxyde d'uranium sous forme de dioxyde d'uranium UO₂, éventuellement de l'oxyde de plutonium, et éventuellement au moins un oxyde d'un actinide mineur, et un deuxième type d'agglomérats comprenant de l'oxyde d'uranium sous forme d'octaoxyde de triuranium U₃O₈, éventuellement de l'oxyde de plutonium, et éventuellement au moins un oxyde d'un actinide mineur.

Que ce soit pour les agglomérats du premier type ou du deuxième type, l'oxyde d'un actinide mineur peut être de l'oxyde d'américium, tel que AmO₂, Am₂O₃, de l'oxyde de curium, tel que CmO₂, Cm₂O₃, de l'oxyde de neptunium, tel que NpO₂ et des mélanges de ceux-ci.

Que ce soit pour les agglomérats du premier type ou du deuxième type, l'oxyde de plutonium peut se présenter sous forme de PuO₂ et/ou Pu₂O₃.

Les agglomérats du premier type et les agglomérats du deuxième type présentent, avantageusement, une forme sphérique, cette forme étant particulièrement adaptée dans le cadre de l'invention, car elle permet un remplissage facile des moules et une répartition dans ces moules, dans lesquels peut avoir lieu l'étape de compactage. Lorsqu'ils présentent une forme sphérique, ces agglomérats peuvent être qualifiés de sphérules.

Les agglomérats du deuxième type peuvent, en particulier, se présenter sous forme de sphères présentant un diamètre moyen supérieur à 50 µm, de préférence allant de 100 à 1200 µm.

L'étape de compactage peut être réalisée au moyen d'une presse, qui va appliquer une pression au mélange d'agglomérats placé dans un moule, dont la forme correspond à la forme que l'on souhaite affecter au combustible poreux, cette forme étant classiquement celle d'une pastille.

La pression appliquée est ajustée en fonction de la microstructure recherchée et des dimensions des agglomérats.

Par exemple, l'étape de compactage peut consister à appliquer au mélange d'agglomérats une pression pouvant aller de 100 à 1200 MPa, de préférence, de 300 à 600 MPa.

Préalablement à l'étape de compactage susmentionnée, le procédé de l'invention peut comprendre une étape de préparation des agglomérats du premier type et/ou des agglomérats du deuxième type et, en particulier, une étape de préparation des agglomérats du deuxième type.

Concernant les agglomérats du deuxième type, ceux-ci peuvent être préparés, avantageusement, par la mise en oeuvre de la succession d'opérations suivante :
i)une opération de préparation d'une solution de charge comprenant une solution nitrique comprenant de l'uranium sous forme de complexe de nitrate d'uranyle hydroxylé et éventuellement du plutonium et/ou au moins un actinide mineur sous forme de nitrate de plutonium et/ou de nitrate d'au moins un actinide mineur ;
ii) une opération de passage de ladite solution sur une résine échangeuse de cations comprenant des groupes carboxyliques, cette résine étant constituée de billes en résine échangeuse de cations comprenant des groupes carboxyliques, moyennant quoi l'uranium sous forme uranyle et éventuellement le plutonium et/ou au moins un actinide mineur sous forme cationique restent fixés à la résine ;
iii) une opération de traitement thermique de ladite résine dans un milieu comprenant de l'oxygène, moyennant quoi l'on obtient les agglomérats du deuxième type, soit plus spécifiquement, des agglomérats de forme sphérique comprenant de l'oxyde d'uranium sous forme d'octaoxyde de triuranium U₃O₈, éventuellement de l'oxyde de plutonium et éventuellement au moins un oxyde d'un actinide mineur.

En procédant de la sorte pour préparer les agglomérats du deuxième type, les inventeurs ont pu constater, de manière surprenante, que les agglomérats résultants présentent une forme sphérique conservée par rapport aux billes initiales de résine échangeuse de cations, en dépit d'un retrait important de taille d'un facteur de 1,5 environ. Cette propriété s'avère particulièrement intéressante, dans le cadre de l'invention, car elle permet de contrôler ultérieurement la porosité du combustible préparé conformément au procédé de l'invention.

Comme mentionné ci-dessus, la première opération consiste à préparer une solution de charge destinée à être passée sur une résine échangeuse de cations comprenant des groupes carboxyliques.

Cette solution de charge, lorsqu'elle ne contient que de l'uranium sous forme d'un complexe d'uranyle hydroxylée, peut être préparée par introduction d'une quantité prédéterminée d'oxyde d'uranium UO₃ ou éventuellement U₃O₈, dans une solution d'acide nitrique, ladite quantité étant fixée de sorte à former un complexe de nitrate d'uranyle hydroxylé de formule UO₂(NO₃)₂₋ₓ(OH)ₓ avec x≤1, par exemple un complexe de nitrate d'uranyle hydrolysé à hauteur de 25% de formule UO₂(NO₃)_{1,5}(OH)_{0,5}.

Cette solution de charge, lorsqu'elle comprend, en outre, du plutonium et/ou au moins un actinide mineur sous forme de nitrate de plutonium (par exemple, Pu(III)) et/ou de nitrate d'au moins un actinide mineur, peut être préparée de la façon suivante :
- la préparation d'une première solution nitrique comprenant du nitrate dudit élément actinide et/ou plutonium ;
- l'introduction d'une quantité prédéterminée d'oxyde d'uranium UO₃ ou éventuellement U₃O₈, dans ladite première solution, ladite quantité étant fixée de sorte à former un complexe de nitrate d'uranyle hydroxylé de formule UO₂(NO₃)₂₋ₓ(OH)ₓ avec x≤1, par exemple un complexe de nitrate d'uranyle hydrolysé à hauteur de 25% de formule UO₂(NO₃)_{1,5}(OH)_{0,5} ;
- une étape de mélange de la solution résultante, de préférence à température ambiante, suivie éventuellement d'une étape de filtration.

Selon une variante, la solution de charge peut être préparée par introduction dans une première solution comprenant du nitrate dudit élément actinide et/ou plutonium et déjà du nitrate d'uranyle ou de l'acide nitrique, d'une quantité prédéterminée de trioxyde d'uranium de sorte à obtenir la quantité d'uranium souhaitée et un complexe de nitrate d'uranyle hydroxylé de formule UO₂(NO₃)₂₋ₓ(OH)ₓ avec x≤1.

Il importe que le cation uranyle se retrouve sous forme de complexe de nitrate d'uranyle hydroxylé, car il a été mis en évidence que la présence de ce complexe constitue le moteur de l'échange entre la résine et les cations présents dans la solution de charge. La présence de ce complexe dans la solution de charge permet notamment de provoquer l'échange ionique concomitant des cations uranyles et des cations actinides et/ou plutonium avec les protons de la résine échangeuse de cations, lors du passage de la solution de charge sur celle-ci.

Cette quantité prédéterminée de trioxyde d'uranium à introduire dans la première solution est fixée de sorte à ce que le rapport molaire entre le nombre de moles d'ions nitrates et le nombre de moles d'uranium soit inférieur à 2.

A titre d'exemple, pour un complexe de nitrate d'uranyle hydrolysée à hauteur de 25% de formule UO₂(NO₃)_{1,5}(OH)_{0,5}, l'équation de formation de ce complexe peut être la suivante :

3UO₂(NO₃)₂ + UO₃ + H₂O → 4UO₂(NO₃)_{1,5}(OH)_{0,5}

A titre d'exemple, pour obtenir un tel complexe, en partant d'une solution de nitrate d'américium contenant a moles d'acide nitrique, on pourra dissoudre (a/R) moles d'oxyde d'uranium, R étant le nombre de moles de nitrates attribué à l'uranium (soit 1,5 ici).

L'opération suivante consiste ensuite à faire passer la solution de charge sur une résine échangeuse de cations comprenant des groupes carboxyliques, se présentant classiquement sous forme d'un lit de billes en résine échangeuse de cations comprenant des groupes carboxyliques, de sorte à permettre la fixation des cations uranyles et des cations actinides et/ou plutonium.

Les résines utilisées se présentent classiquement sous forme de billes polymères intégrant des groupes échangeables, dans notre cas des carboxylates portant des protons H⁺. Les résines utilisées dans le cadre de l'invention peuvent être des résines résultant de la (co)polymérisation de l'acide (méth)acrylique ou de l'acrylonitrile avec un agent de réticulation, notamment le divinylbenzène (DVB).

Dans le cas de l'acrylonitrile, il faudra prévoir, après polymérisation, une étape d'hydrolyse des groupes -CN en groupes carboxyliques.

Des résines commerciales pouvant être utilisées pour la mise en oeuvre du procédé de l'invention peuvent être les résines fournies par Rohm&Haas, telles que les résines IMAC HP 335.

La résine échangeuse de cations choisie peut être amenée à subir une ou plusieurs étapes de traitement avant passage de la solution de charge, parmi lesquelles on peut citer :
- une étape de calibrage, par voie humide, de sorte à isoler la fraction granulométrique désirée, par exemple, une fraction allant de 600 à 800 µm ;
- au moins une étape de lavage en mettant en oeuvre un cycle de traitement basique et acide avec de l'ammoniaque et de l'acide nitrique suivie d'une étape de rinçage à l'eau déminéralisée ;
- une étape de séchage après l'étape de rinçage ;
- une étape de tri de forme, de sorte à éliminer les particules brisées ou non sphériques, cette étape pouvant être réalisée sur une table inclinée.

On précise que l'étape de lavage susmentionnée a pour but de nettoyer la résine de toute présence de résidus de synthèse. Ainsi, la fixation d'un groupe ammonium par réaction de neutralisation du proton des groupes carboxyliques permet un gonflement de la résine propice à un meilleur accès des pores à l'eau de lavage. Le passage d'acide nitrique permet ensuite de remplacer les groupes ammonium par des protons H⁺ pour rétablir les groupes carboxyliques.

La résine, éventuellement traitée si besoin est, est ensuite avantageusement humidifiée généreusement et placée dans une colonne pour former un lit de particules de résine destiné à recevoir la solution de charge.

L'opération de passage de la solution de charge sur la résine consiste classiquement à la laisser écouler, par percolation, à travers le lit et à récupérer en sortie du lit un éluat. Au cours de ce passage, la résine comprenant des groupes carboxyliques échange progressivement ses protons contre les cations uranyles et les cations de l'élément actinide et/ou plutonium. Le pH de l'éluat diminue brusquement, lorsque débute l'échange avec la résine sous forme proton (c'est-à-dire comprenant des groupes carboxyliques -COOH). Il remonte ensuite progressivement jusqu'à retrouver la valeur du pH de la charge d'entrée, ce qui signifie que l'échange est terminé et que la résine se trouve saturée en cations métalliques. On peut ainsi stopper le passage de la solution de charge sur la résine. En d'autres termes, on procède, classiquement, au passage sur la résine de la solution de charge jusqu'à obtention d'un éluat présentant une concentration identique à celle de la solution de charge.

L'éluat récupéré au cours du procédé peut être amené à subir une étape de recyclage, par exemple, en ajustant l'acidité de cet éluat par ajout d'acide nitrique, en dissolvant éventuellement dans la solution de l'oxyde d'uranium et en complétant par une solution de nitrate d'actinide et/ou de lanthanide si besoin est, de sorte à constituer une nouvelle solution de charge, destinée à être passée sur la résine.

Après l'opération de passage, il peut être procédé à une opération de lavage de la résine avec de l'eau déminéralisée, notamment en vue de chasser la charge restante dans les pores de la résine.

Il peut être procédé également, avant l'opération de traitement thermique, à une opération de séchage de la résine à une température aux environs de 100°C, par exemple à 105°C, de sorte à provoquer l'évaporation de l'eau présente dans les pores de la résine.

Enfin, la résine est soumise à une opération de traitement thermique, dans un milieu comprenant de l'oxygène, moyennant quoi l'on obtient des agglomérats de forme sphérique comprenant de l'oxyde d'uranium sous forme d'octaoxyde de triuranium U₃O₈, éventuellement de l'oxyde de plutonium et/ou un oxyde d'au moins un actinide mineur.

Cette opération de traitement thermique est réalisée classiquement à une température et durée efficaces pour obtenir la formation d'octaoxyde de triuranium U₃O₈, éventuellement d'oxyde de plutonium et/ou d'oxyde d'au moins un actinide mineur. Cette température et durée efficaces peuvent être aisément déterminées par l'homme du métier par des essais simples jusqu'à obtention des phases recherchées, ces phases pouvant être détectées par des techniques d'analyse simple, telles que la diffraction aux rayons X.

A titre d'exemple, cette opération de traitement thermique peut être réalisée à une température allant de 600 à 1400°C pendant une durée allant de 1 à 6 heures.

Concernant les agglomérats du premier type, ils peuvent être préparés par réduction d'agglomérats comprenant de l'oxyde d'uranium sous forme d'octaoxyde de triuranium U₃O₈ éventuellement en association avec de l'oxyde de plutonium et un ou plusieurs oxydes d'au moins un actinide mineur, lesdits agglomérats pouvant être préparés préalablement par la mise en oeuvre d'une succession d'opérations i), ii) et iii) telles que définies ci-dessus.

Cette réduction peut consister à appliquer auxdits agglomérats une température et durée efficaces pour obtenir des agglomérats du premier type, à savoir des agglomérats comprenant de l'oxyde d'uranium sous forme de dioxyde d'uranium UO₂, éventuellement de l'oxyde de plutonium, et éventuellement au moins un oxyde d'un actinide mineur. Cette température et durée efficaces peuvent être aisément déterminées par l'homme du métier par des essais simples jusqu'à obtention des phases recherchées, ces phases pouvant être détectées par des techniques d'analyse simple, telle que la diffraction aux rayons X.

A titre d'exemple, cette réduction peut être réalisée à une température allant de 600 à 1000°C pendant une durée allant de 1 à 12 heures.

Le procédé de l'invention peut comprendre, en outre, une étape de mélange à sec desdits agglomérats du premier type et du deuxième type, cette étape de mélange à sec étant mise en oeuvre avant l'étape de compactage et après l'éventuelle étape de préparation desdits agglomérats.

Cette étape de mélange consiste à mettre en contact les agglomérats du premier type et du deuxième type dans des proportions appropriées en fonction de la stoechiométrie recherchée et vise à obtenir, notamment, un mélange homogène, par exemple par le biais d'un agitateur à rouleaux, d'un mélangeur du type turbula ou encore d'un agitateur oscillant. Cette étape de mélange sera mise en oeuvre avec le soin nécessaire, afin d'éviter d'endommager les agglomérats et notamment de les briser.

A l'issue du procédé de l'invention, l'on procède à la mise en oeuvre de l'étape de réduction b), qui peut être réalisée par passage d'un courant comprenant un gaz réducteur à une température allant de 600 à 1000°C pendant une durée allant de 1 à 12 heures, cette étape de réduction ayant pour fonction de réduire tout ou partie de l'octaoxyde de triuranium U₃O₈ en dioxyde d'uranium UO₂ moyennant quoi il y a formation concomitante d'une porosité générée par la réduction de taille de maille entre celle de U₃O₈ et celle de UO₂.

Après l'étape de réduction b), il peut être mis en oeuvre une étape de frittage, ayant pour but de consolider le combustible obtenu à l'issue du procédé, et notamment de le densifier.

L'étape de frittage peut être réalisée par chauffage à une température allant de 1000 à 1900°C pendant une durée allant de 1 à 12 heures.

L'étape de réduction et l'étape de frittage susmentionnées peuvent être mises en oeuvre au cours d'un seul cycle thermique, l'étape de réduction ayant lieu pendant la montée en température jusqu'à 1000°C tandis que l'étape de frittage a lieu au-delà de 1000°C (de 1000 à 1900°C comme mentionné ci-dessus).

D'autres caractéristiques apparaîtront mieux à la lecture du complément de description qui suit, lequel se rapporte à un exemple de fabrication d'un combustible poreux conforme à l'invention.

Bien entendu, l'exemple qui suit n'est donné qu'à titre d'illustration de l'objet de l'invention et ne constitue, en aucun cas, une limitation de cet objet.

### BRÈVE DESCRIPTION DES DESSINS

La figure 1 représente une photographie obtenue par microscopie optique de sphérules de U₃O₈ obtenues conformément à l'exemple 1.
La figure 2 représente une photographie obtenue par microscopie optique de sphérules de UO₂ obtenues conformément à l'exemple 1.
La figure 3 représente un graphique illustrant le cycle thermique appliqué lors de l'étape de frittage réactif dans le cadre de l'exemple 1 et de l'exemple comparatif.
La figure 4 représente une photographie obtenue par microscopie optique des pastilles obtenues à l'issue de l'exemple 1.
La figure 5 représente une photographie obtenue par microscopie optique des pastilles obtenues à l'issue de l'exemple comparatif.

### EXPOSÉ DÉTAILLÉ DE MODES DE RÉALISATION PARTICULIERS

### EXEMPLE 1

Cet exemple illustre la préparation d'un combustible poreux d'oxyde d'uranium comprenant du UO₂ conformément au procédé de l'invention.

Cette préparation comprend :
- une étape de préparation de sphérules de U₃O₈ ;
- une étape de préparation de sphérules de UO₂ ;
- une étape de mélange à sec des sphérules de U₃O₈ ou de UO₂ ;
- une étape de pressage dudit mélange ;
- les étapes de réduction et de frittage du mélange ainsi pressé.

### a) Préparation de sphérules de U₃O₈

Dans un premier temps, on prépare une solution de charge en nitrate d'uranyle déficiente en acide obtenue par dissolution jusqu'à saturation de 39 g de trioxyde d'uranium UO₃ dans 1 L de solution de nitrate d'uranyle 260 mM. On obtient ainsi, après filtration, une solution d'uranyle partiellement hydrolysée et correspondant à la formulation UO₂(NO₃)_{1,3}(OH)_{0,7}. La concentration finale en uranium est de 400 mM et la valeur de pH s'élève à 3,4, ce qui constitue des conditions suffisantes pour un échange cationique sur une résine carboxylique.

Dans un deuxième temps, cette solution préparée préalablement est passée, avec un débit de 2 mL/min sur une colonne de section 1,8 cm² comprenant un lit de résine échangeuse de cations de type carboxylique du type IMAC HP 335 de la société Dow Chemicals, de tranche granulométrique 630-800 µm et équivalente à 40 g de résine sèche sous forme protonique.

L'échange cationique s'effectue entre les cations uranyles UO₂²⁺ et les protons de la résine selon l'équation suivante :

2 RH + 2, 9 (UO₂)(NO₃)_{1,3}(OH)_{0,7} → R₂UO₂ + 2H₂O + 1,9 (UO₂)(NO₃)₂

(R étant un motif organique de la résine).

On obtient ainsi, après stabilisation du pH du percolat à 3,4, une résine chargée en uranium présentant un pourcentage massique en métal de 43%. La résine est ensuite séchée à 105°C dans un four tubulaire pendant 4 heures.

La résine ainsi séchée est soumise ensuite à un traitement thermique consistant à la calciner sous air à 800°C pendant 4 heures avec une montée en température de 1°C/min, moyennant quoi le produit résultant se présente sous forme de sphérules, qui, après analyse par diffraction des rayons X, affichent la présence d'une phase U₃O₈ de structure orthorhombique. Ces sphérules présentent un diamètre moyen de particules, mesuré par microscopie optique, de 425 µm.

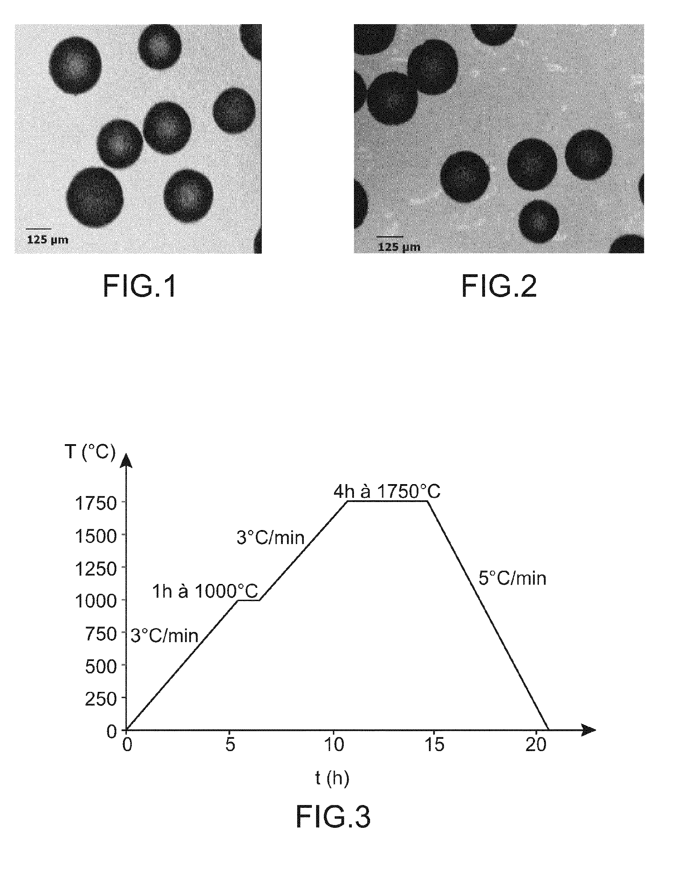

Une photographie de ces sphérules obtenue par microscopie optique est représentée à la figure 1.

### b) Préparation de sphérules de UO₂

Ces sphérules sont préparées à partir d'une fraction de sphérules en U₃O₈. Ces dernières sont soumises à un traitement thermique sous atmosphère réductrice comprenant de l'argon et de l'hydrogène (4%) jusqu'à 700°C pendant 6 heures. On obtient ainsi des sphérules d'oxydes UO₂ identifiées par diffraction des rayons X. Ces sphérules présentent un diamètre moyen de particules, mesuré par microscopie optique, de 380 µm.

Une photographie de ces sphérules obtenue par microscopie optique est représentée à la figure 2.

### c) Etape de mélange à sec

Dans cette étape, l'on procède au mélange à sec de 180 mg de sphérules en U₃O₈ et de 270 mg de sphérules en UO₂ au moyen d'un mélangeur du type turbula pendant 15 minutes, de sorte à obtenir un mélange homogène.

### d) Etape de compactage du mélange

Le mélange issu de l'étape c) est soumis à un compactage à 400 MPa à l'aide d'une matrice tri-coquille de 5 mm de diamètre avec lubrification à l'acide stéarique de la matrice et des pistons.

### e) Etapes de réduction et de frittage

Le mélange ainsi pressé est soumis à une étape de réduction et une étape de frittage sous argon hydrogéné à 4% selon un cycle thermique illustré par la figure 3 jointe en annexe.

L'étape de réduction a lieu pendant la montée en température jusqu'à 1000°C, tandis que l'étape de frittage en tant que telle a lieu à 1750°C pendant 4 heures.

A l'issue de ces étapes, on obtient une pastille présentant une porosité de l'ordre de 17% volumique (qui correspond à la porosité géométrique déterminée par pesée et mesure du volume apparent).

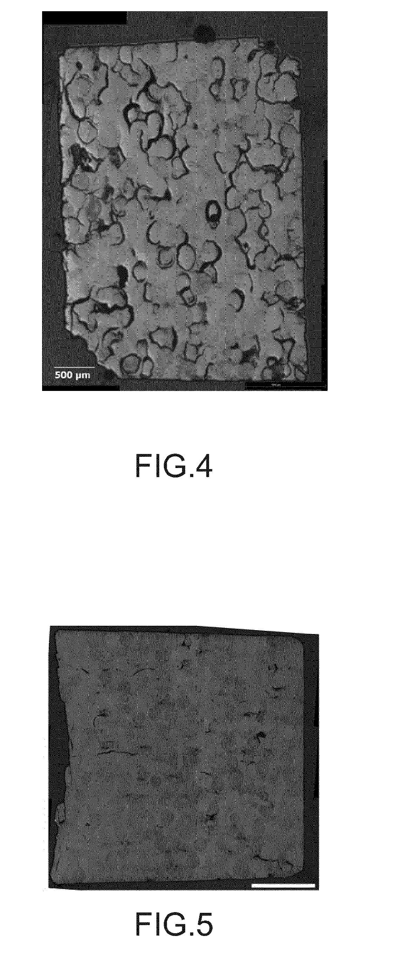

Une coupe polie de la pastille frittée a été observée au microscope optique (le résultat de cette observation étant représenté sur la figure 4 jointe en annexe).

La pastille, dont la densité géométrique atteint 83% de la densité théorique de UO₂ présente un fort taux de porosité ouverte percolante et distribuée de manière homogène.

### EXEMPLE COMPARATIF

Cet exemple illustre la préparation d'un combustible d'oxyde d'uranium UO₂ uniquement à partir de sphérules de UO₂.

Cette préparation comprend :
- une étape de préparation de sphérules de UO₂ ;
- une étape de pressage des sphérules ainsi obtenues ;
- une étape de frittage du mélange ainsi pressé.

### a) Préparation des sphérules de UO₂

Dans un premier temps, on prépare une solution de charge en nitrate d'uranyle déficiente en acide obtenue par dissolution jusqu'à saturation de 39 g de trioxyde d'uranium UO₃ dans 1 L de solution de nitrate d'uranyle 260 mM. On obtient ainsi, après filtration, une solution d'uranyle partiellement hydrolysée et correspondant à la formulation UO₂(NO₃)_{1,3}(OH)_{0,7}. La concentration finale en uranium est de 400 mM et la valeur de pH s'élève à 3,4, ce qui constitue des conditions suffisantes pour un échange cationique sur une résine carboxylique protonée.

Dans un deuxième temps, cette solution préparée préalablement est passée, avec un débit de 2 mL/min sur une colonne de section de 1,8 cm² comprenant un lit de résine échangeuse de cations de type carboxylique du type IMAC HP 335 de la société Dow Chemicals, de tranche granulométrique 630-800 µm et équivalente à 40 g de résine sèche sous forme protonique.

L'échange cationique s'effectue entre les cations uranyles UO₂²⁺ et les protons de la résine selon l'équation suivante :

2 RH + 2,9 (UO₂)(NO₃)_{1,3}(OH)_{0,7} → R₂UO₂ + 2H₂O + 1,9 (UO₂)(NO₃)₂

(R étant un motif organique de la résine).

On obtient ainsi, après stabilisation du pH du percolat à 3,4, une résine chargée en uranium présentant un pourcentage massique en métal de 43%. La résine est ensuite séchée à 105°C dans un four tubulaire pendant 4 heures.

La résine ainsi séchée est soumise ensuite à un premier traitement thermique consistant à la calciner sous air à 800°C pendant 4 heures avec une montée en température de 1°C/min, moyennant quoi le produit résultant se présente sous forme de sphérules, qui, après analyse par diffraction des rayons X, affichent la présence d'une phase U₃O₈ de structure orthorhombique. Ces sphérules présentent un diamètre moyen de particules, mesuré par microscopie optique, de 425 µm.

Ces sphérules ainsi préparées sont soumises à un deuxième traitement thermique sous atmosphère réductrice comprenant de l'argon et de l'hydrogène (4%) jusqu'à 700°C pendant 6 heures. On obtient ainsi des sphérules d'oxydes UO₂ identifiées par diffraction des rayons X. Ces sphérules présentent un diamètre moyen de particules, mesuré par microscopie optique, de 380 µm.

### b) Etape de pressage des sphérules obtenues à l'étape a)

Dans cette étape, l'on procède au pressage de 700 mg de sphérules de UO₂ préparées à l'étape a) susmentionnée, consistant à appliquer une pression de 400 MPa au moyen d'une matrice tri-coquille de 5 mm de diamètre avec lubrification à l'acide stéarique de la matrice et des pistons.

La densité géométrique de la pastille en cru, déterminée par pesée et mesure des dimensions (diamètre et hauteur mesurées respectivement à l'aide d'un profilomètre et d'un comparateur) est estimée à 56% de la densité théorique de l'oxyde d'uranium UO₂ (qui est de 10,95 g/cm³ conformément à la fiche JCPDS 00-041-1422).

### c) Etape de frittage

Au cours de cette étape, il est procédé au frittage réactif de la pastille en cru sous argon hydrogéné à 1750°C pendant 4 heures, selon un cycle thermique identique à celui d'exemple 1 (ce cycle thermique étant représenté sur la figure 3 jointe en annexe).

A l'issue de ce frittage, la pastille obtenue présente une porosité de près de 7% (cette porosité étant déterminée géométriquement).

Une coupe polie de la pastille frittée a été observée au microscope optique (une représentation de cette observation étant illustrée par la figure 5 jointe en annexe).

La pastille, dont la densité géométrique atteint 93% de la densité théorique de UO₂ présente un faible taux de porosité.

## Revendications

1. Procédé de fabrication d'un combustible nucléaire poreux comprenant de l'uranium, éventuellement du plutonium, et éventuellement au moins un actinide mineur comprenant successivement les étapes suivante :
a) une étape de compactage d'un mélange comprenant un premier type d'agglomérats comprenant de l'oxyde d'uranium sous forme de dioxyde d'uranium UO₂, éventuellement de l'oxyde de plutonium, et éventuellement au moins un oxyde d'un actinide mineur, et un deuxième type d'agglomérats comprenant de l'oxyde d'uranium sous forme d'octaoxyde de triuranium U₃O₈, éventuellement de l'oxyde de plutonium, et éventuellement au moins un oxyde d'un actinide mineur;
b) une étape de réduction en milieu réducteur du mélange compacté, de sorte à réduire tout ou partie de l'octaoxyde de triuranium U₃O₈ en dioxyde d'uranium UO₂,
dans lequel les agglomérats du deuxième type sont préparés préalablement à l'étape de compactage par la succession d'opérations suivante :
i)une opération de préparation d'une solution de charge comprenant une solution nitrique comprenant de l'uranium sous forme de complexe de nitrate d'uranyle hydroxylé et éventuellement du plutonium et/ou au moins un actinide mineur sous forme de nitrate de plutonium et/ou de nitrate d'au moins un actinide mineur ;
ii) une opération de passage de ladite solution sur une résine échangeuse de cations comprenant des groupes carboxyliques, cette résine étant constituée de billes en résine échangeuse de cations comprenant des groupes carboxyliques, moyennant quoi l'uranium sous forme uranyle et éventuellement le plutonium et/ou au moins un actinide mineur sous forme cationique restent fixés à la résine ;
iii) une opération de traitement thermique de ladite résine dans un milieu comprenant de l'oxygène, moyennant quoi l'on obtient les agglomérats du deuxième type.

2. Procédé de fabrication d'un combustible poreux selon la revendication 1, dans lequel les agglomérats du premier type présentent une forme sphérique.

3. Procédé de fabrication d'un combustible selon la revendication 1 ou 2, dans lequel les agglomérats du deuxième type présentent une forme sphérique.

4. Procédé de fabrication d'un combustible selon l'une quelconque des revendications précédentes, dans lequel les agglomérats du premier type sont préparés préalablement à l'étape de compactage.

5. Procédé de préparation d'un combustible selon la revendication 4, dans lequel les agglomérats du premier type sont préparés par réduction d'agglomérats comprenant de l'oxyde d'uranium sous forme d'octaoxyde de triuranium U₃O₈ éventuellement en association avec de l'oxyde de plutonium et éventuellement un ou plusieurs oxydes d'au moins un actinide mineur.

6. Procédé selon la revendication 5, dans lequel les agglomérats comprenant de l'oxyde d'uranium sous forme d'octaoxyde de triuranium U₃O₈ éventuellement en association avec de l'oxyde de plutonium et un ou plusieurs oxydes d'au moins un actinide mineur sont issus d'une succession d'opérations i), ii) et iii) telles que définies à la revendication 1.

7. Procédé selon l'une quelconque des revendications précédentes, dans lequel les agglomérats du deuxième type se présentent sous forme de sphères présentant un diamètre moyen supérieur à 50 µm, de préférence allant de 100 à 1200 µm.

8. Procédé selon l'une quelconque des revendications, comprenant, en outre, une étape de mélange à sec desdits agglomérats du premier type et du deuxième type, cette étape de mélange étant mise en oeuvre avant l'étape de compactage.

9. Procédé selon l'une quelconque des revendications précédentes, dans lequel l'étape de réduction b) est réalisée par passage d'un courant comprenant un gaz réducteur à une température allant de 600 à 1000°C pendant une durée allant de 1 à 12 heures.

10. Procédé selon l'une quelconque des revendications précédentes, comprenant, après l'étape b), une étape de frittage.

11. Procédé selon la revendication 10, dans lequel l'étape de frittage est réalisée par chauffage à une température allant de 1000 à 1900°C pendant une durée allant de 1 à 12 heures.

## Patentansprüche

1. Verfahren zur Herstellung eines porösen Kernbrennstoffs, der Uran, gegebenenfalls Plutonium und gegebenenfalls mindestens ein minores Actinid umfasst, das nacheinander folgende Schritte umfasst:
a) einen Schritt des Kompaktierens einer Mischung, die einen ersten Typ von Agglomeraten, die Uranoxid in Form von Urandioxid UO₂, gegebenenfalls Plutoniumoxid und gegebenenfalls mindestens ein Oxid eines minoren Actinids umfassen, und einen zweiten Typ von Agglomeraten, die Uranoxid in Form von Triuranoctaoxid U₃O₈, gegebenenfalls Plutoniumoxid und gegebenenfalls mindestens ein Oxid eines minoren Actinids umfassen, umfasst;
b) einen Schritt des Reduzierens der kompaktierten Mischung in reduzierendem Medium zur vollständigen oder teilweisen Reduktion des Triuranoctaoxids U₃O₈ zu Urandioxid UO₂,
wobei die Agglomerate des zweiten Typs vor dem Kompaktierungschritt durch die Abfolge folgender Arbeitsgänge hergestellt werden:
i) einen Arbeitsgang des Herstellens einer Beschickungslösung, umfassend eine salpetersaure Lösung, die Uran in Form eines Hydroxyuranylnitrat-Komplexes und gegebenenfalls Plutonium und/oder mindestens ein minores Actinid in Form von Plutoniumnitrat und/oder Nitrat mindestens eines minoren Actinids umfasst;
ii) einen Arbeitsgang des Hindurchführens der Lösung durch ein Carboxylgruppen umfassendes Kationenaustauscherharz, wobei dieses Harz aus Perlen aus Carboxylgruppen umfassendem Kationenaustauscherharz besteht, wodurch das Uran in Uranylform und gegebenenfalls das Plutonium und/oder mindestens ein minores Actinid in kationischer Form an das Harz gebunden bleiben;
iii) einen Arbeitsgang des thermischen Behandelns des Harzes in einem sauerstoffhaltigen Medium, wodurch man die Agglomerate des zweiten Typs erhält.

2. Verfahren zur Herstellung eines porösen Brennstoffs nach Anspruch 1, bei dem die Agglomerate des ersten Typs eine sphärische Form aufweisen.

3. Verfahren zur Herstellung eines Brennstoffs nach Anspruch 1 oder 2, bei dem die Agglomerate des zweiten Typs eine sphärische Form aufweisen.

4. Verfahren zur Herstellung eines Brennstoffs nach einem der vorhergehenden Ansprüche, bei dem die Agglomerate des ersten Typs vor dem Kompaktierungsschritt hergestellt werden.

5. Verfahren zur Herstellung eines Brennstoffs nach Anspruch 4, bei dem die Agglomerate des ersten Typs durch Reduktion von Agglomeraten, die Uranoxid in Form von Triuranoctaoxid U₃O₈, gegebenenfalls in Kombination mit Plutoniumoxid und gegebenenfalls einem oder mehreren Oxiden mindestens eines minoren Actinids, umfassen, hergestellt werden.

6. Verfahren nach Anspruch 5, bei dem die Agglomerate, die Uranoxid in Form von Triuranoctaoxid U₃O₈, gegebenenfalls in Kombination mit Plutoniumoxid und gegebenenfalls einem oder mehreren Oxiden mindestens eines minoren Actinids, umfassen, aus einer Abfolge von Arbeitsgängen i), ii) und iii) gemäß Anspruch 1 stammen.

7. Verfahren nach einem der vorhergehenden Ansprüche, bei dem die Agglomerate des zweiten Typs in Form von Kugeln mit einem mittleren Durchmesser von mehr als 50 µm und vorzugsweise im Bereich von 100 bis 1200 µm vorliegen.

8. Verfahren nach einem der vorhergehenden Ansprüche, das außerdem einen Schritt des Trockenmischens der Agglomerate des ersten Typs und des zweiten Typs umfasst, wobei dieser Mischschritt vor dem Kompaktierungsschritt durchgeführt wird.

9. Verfahren nach einem der vorhergehenden Ansprüche, bei dem der Reduktionsschritt b) durch Durchleiten eines einen ein reduzierendes Gas umfassenden Stroms bei einer Temperatur im Bereich von 600 bis 1000°C über einen Zeitraum im Bereich von 1 bis 12 Stunden durchgeführt wird.

10. Verfahren nach einem der vorhergehenden Ansprüche, das nach Schritt b) einen Sinterschritt umfasst.

11. Verfahren nach Anspruch 10, bei dem der Sinterschritt durch Erhitzen auf eine Temperatur im Bereich von 1000 bis 1900°C über einen Zeitraum im Bereich von 1 bis 12 Stunden durchgeführt wird.

## Claims

1. Method for producing a porous nuclear fuel including uranium, optionally plutonium, and optionally at least one minor actinide which includes the following series of steps:
a) a step of compacting a mixture including a first type of agglomerate including uranium oxide in the form of uranium dioxide UO₂, optionally plutonium oxide, and optionally at least one minor actinide oxide, and a second type of agglomerate including uranium oxide in the form of triuranium octaoxide U₃O₈, optionally plutonium oxide, and optionally at least one minor actinide oxide;
b) a step of reducing the compacted mixture in a reducing medium, so as to reduce all or part of the triuranium octaoxide U₃O₈ into uranium dioxide UO₂,
in which the agglomerates of the second type are prepared prior to the compacting step by the following series of operations:
i)an operation of preparing a charge solution comprising a nitric solution including uranium in the form of a complex of hydroxylated uranyl nitrate and optionally plutonium and/or at least one minor actinide in the form of plutonium nitrate and/or nitrate of at least one minor actinide;
ii) an operation of passing said solution through a cation exchange resin comprising carboxylic groups, said resin being constituted of beads of cation exchange resin comprising carboxylic groups, such that the uranium in uranyl form and optionally plutonium and/or at least one minor actinide in cationic form remain fixed to the resin;
iii) an operation of heat treatment of said resin in a medium comprising oxygen, thereby obtaining the agglomerates of the second type.

2. Method for producing a porous fuel according to claim 1, in which the agglomerates of the first type have a spherical shape.

3. Method for producing a fuel according to claim 1 or 2, in which the agglomerates of the second type have a spherical shape.

4. Method for producing a fuel according to any of the preceding claims, in which the agglomerates of the first type are prepared prior to the compacting step.

5. Method for preparing a fuel according to claim 4, in which the agglomerates of the first type are prepared by reduction of agglomerate including uranium oxide in the form of triuranium octaoxide U₃O₈ optionally in association with plutonium oxide and optionally one or more oxides of at least one minor actinide.

6. Method according to claim 5, in which the agglomerates including uranium oxide in the form of triuranium octaoxide U₃O₈ optionally in association with plutonium oxide and one or more oxides of at least one minor actinide are derived from a series of operations i), ii) and iii) as defined in claim 1.

7. Method according to any of the preceding claims, in which the agglomerates of the second type are in the form of spheres having an average diameter above 50 µm, preferably ranging from 100 to 1200 µm.

8. Method according to any of the claims, further comprising a step of dry mixing of said agglomerates of the first type and of the second type, said mixing step being implemented before the compacting step.

9. Method according to any of the preceding claims, in which the reduction step b) is carried out by passage of a current comprising a reducing gas at a temperature ranging from 600 to 1000°C for a duration ranging from 1 to 12 hours.

10. Method according to any of the preceding claims, comprising, after step b), a step of sintering.

11. Method according to claim 10, in which the fritting step is carried out by heating at a temperature ranging from 1000 to 1900°C for a duration ranging from 1 to 12 hours.
